# EUROPEAN PATENT APPLICATION

(11) **EP 1 890 230 A1**
(43) Date of publication of application: **20.02.2008**
(21) Application number: 06300878.3
(22) Date of filing: 15.08.2006
(51) Int. Cl.: G06F 9/445, G06F 11/14

(54) **Software replacement in a stream processing system**

(71) Applicant: Alcatel Lucent, 75008 Paris (FR)
(72) Inventor: Waitzmann, Carsten, 70806 Kornwestheim (DE); Winkler, Andreas, 71254 Ditzingen (DE)
(74) Representative: Brose, Gerhard

(57) **Abstract**

The invention concerns a method for replacing software of a stream processing system like a media gateway with redundancy comprising the steps of loading an upgrade (UG) of the software, or a part of the software, while the current release (CR) is running and integrating and activating the upgrade, such that the running upgrade takes over the functionality, where a redundancy sub-system for an operational sub-system (I1), which should be upgraded, is reconfigured to an independent sub-system (I2) and the upgrade (UG) is loaded on the independent system, while the operational sub-system (I1) remains operable with the current release (CR). Then operational context information is synchronized between the operable sub-system (I1) and the independent sub-system (I2) in order to synchronize the two running sub-systems, and after the synchronization, the running independent system (I2) takes over hitless (with stable bearer preservation) the functionality of the operational sub-system and becomes an operational sub-system running the upgrade (UG). Finally, the upgrade is loaded on the original operating sub-system (I1) that is reconfigured as a redundancy sub-system.

The invention also concerns a respective stream processing system and a computer software product.

## Description

The invention concerns a method for replacing a software of a stream processing system, a stream processing system and a computer software product.

Media Gateways are acting as carrier grade network elements within Next Generation Networks (NGN). Typical gateway architectures, especially for high capacity applications, are build on different hardware modules, like circuit interface modules, switch fabric modules, etc., also used for the purpose of system scalability.

Carrier grade-ness implies specific requirements on system availability, which can be mapped to very small system outage time figures. Therefore operation and maintenance activities (like Software replacement procedure) shall not contribute to the system outage time and moreover shall be executable without impacting any currently established traffic running on the system.

### Software replacement procedure can be subdivided into 2 categories:

Software replacement procedure without interface and data context changes.
Software replacement procedure with interface and data context changes.

Interface denotes a system internal software interface used for inter board communication. Data context denotes context information, required for active/standby board synchronization as a key element to meet the system requirement of stable bearer preservation. The term system is understood as a device or a group of collaborating devices.

Whereas in the first case current and target, i.e. the upgrade and the previous release software may run together in the same system. In the second case this is not immediately possible and therefore special mechanism have to be introduced to cope with those situations.

In principle, this approach enables Software upgrading and downgrading procedures, as well as Software replacements between non-consecutive Software releases. The new invented Software replacement procedure is suited to capture with the requirements mentioned in the introduction in an efficient way.

Software replacement procedure without interface and data context changes are typically implemented using sequentially the build-in system redundancy capabilities, which means that current release and the upgrade have to run in the same system at the same time. Other implementations only focus on minimizing service interruption time (fast-boot) without stable bearer preservation (non-hitless).

An approach for upgrading a database while running using a shadow system is disclosed in US2003130985. There, during an upgrade a shadow system is built as a new instance of a database. The shadow system may be a complete central instance and comprise the new release to be installed. The new release or "destination release" may represent the release(s) of software application(s) and/or data that the user wants to run in the future. The destination release may replace a "source release" of software application(s) and/or data currently running on the database as part of a main productive system. In one embodiment, the shadow system may be operated in parallel with the main productive system to minimize the required downtime for the upgrade.

This application focus on upgrading especially executables, i.e. executable software portions. Such an upgrade procedure is disclosed in WO0106798. The disclosed method and apparatus can upgrade software on a continuously running system, while the system is operating. A base set of software is built which contains a reserved memory area in its memory architecture. Upgrade source files are built into the reserved memory area. The upgrade images are extracted and converted into loadable upgrade images. A header indicates where the upgrade is to be downloaded in the system and also identifies the location in the reserved memory area at which the upgrade is to be stored in the relevant component of the system. The upgrade is downloaded into the respective reserved memory area in the memory storage devices in the respective components in the system. The downloads can be performed while the system is operating because the reserved memory area does not contain live code. The upgrades are activated or deactivated using a jump instruction sequence.

This is not suitable for stream processing devices like media gateways facing hard real time constraints, since the upgrade procedure itself would influence the execution and would cause malfunction.

The technical problem is to provide a mechanism that enables software replacement in a running, distributed system without service interruption and stable bearer preservation irrespective of the amount/scope of changes implied by the upgrade, i.e. the software that replaces an current release.

Software replacement procedure with interface and data context changes cannot make use of this approach as this mechanism doesn't avoid that current and upgrade are running at the same time in different modules (which may lead to abnormal system functioning and may even cause the system to crash).

This problem is solved by a method for upgrading software of a stream processing system with redundancy comprising the steps of loading an upgrade of the software, or a part of the software, while the current release is running and integrating and activating the upgrade, such that the running upgrade takes over the functionality, where the stream processing system comprises a redundancy sub-system for an operational sub-system. This redundancy sub-system is reconfigured to an independent sub-system and the upgrade is loaded on the independent system, while the operational sub-system remains operable with the current release. Then operational context information is synchronized between the operable sub-system and the independent sub-system in order to synchronize the two running sub-systems, and after the synchronization, the running independent system takes over the functionality of the operational sub-system and becomes an operational running the upgrade. Finally, the upgrade is loaded on the original operating sub-system that is reconfigured as a redundancy sub-system.

The problem is solved inter alia by a stream processing system comprising an operational sub-system and a redundancy sub-system for the operational sub-system, the stream processing system is adapted to perform an upgrade of a software running on the two sub-systems. The stream media processing system comprising reconfiguration means for reconfiguring the redundancy sub-system into an independent sub-system running the upgrade, the stream processing system comprising intercommunication means between the sub-system, where the intercommunication means are adapted to synchronize operational context information between the two sub-systems, and where the reconfiguration means are adapted to transfer the functionality from the operational sub-system to the independent sub-system making the independent sub-system operable, and where the stream processing system comprising upgrading means for upgrading the operational sub-system, and where the reconfiguration means are adapted to reconfigure the operational sub-system after upgrading as a redundancy sub-system.

And the problem is solved by a computer software product comprising a component for streaming processing and a redundancy component for the component, where the computer software product comprising programming means for reconfiguring the redundancy component as independent instance of the upgrade, the component and the independent instance comprising an interface for synchronizing operational context information, such that the independent instance can take over the functionality of the component and the component can be upgraded independently for becoming a redundancy component.

The approach relies on redundant system architecture. The sub-system to be updated with the replacement software release, i.e. the upgrade, needs a respective redundant sub-system.

Based on this redundant system architecture it is possible to transfer a redundant component into two active component instances, fully decoupled. One instance is running the current release and the other instance the upgrade. During this period of time, the redundant component cannot compensate failures, i.e. the fault tolerance is degraded.

A dedicated, simple and stable interface is introduced to enable context data synchronization between the two media gateway component instances. Beside this specific interface the media gateway component instances running concurrently without intercommunication with the other, i.e. the media gateway component instances must act fully isolated from each other.

The exchanged context data is described using a standardized content descriptive language like XML or ASN.1.

The component instance running the upgrade applies the received context data to its software sub-modules by means of a roll-out-mechanism. Roll-out-mechanism denotes a mechanism, which behaves identically as if the context data would have been derived from an external interface, like a H.248 request. (on the contrary to the regular active/standby synchronization on software sub module level). The roll-out-mechanism stipulates the independent component to synchronize with the component running the current release.

Finally the media gateway component instance still running the current release is upgraded as well and the system is merged again into one fully redundant media gateway system with a redundant media gateway component.

The major advantages of this invention is that hitless software replacements can be executed without service interruption time and stable bearer preservation irrespective of the amount and type of software changes (with and w/o interface and context data changes).

Software upgrade and downgrade procedure can be supported as well. Non-consecutive software release replacements can be also supported (because of using a content descriptive language).

As long as the system takeover has not been initiated the software replacement procedure can be interrupted/stopped anytime without loosing any bearer. System returns to a redundancy mode.

The software replacement procedure risk is minimized due to the fact that communication between media gateway component instances is limited to a minimum through a single, simple communication point.

Usage of content descriptive standard language ensures maintainability of this interface.

Applying the roll-out-mechanism makes sure that the synchronization points between media gateway component instances are kept at the minimum. Each media gateway component instance might use its regular internal mechanisms to setup the bearer properly.

The invention is described in detail using the figures, where
Fig. 1 shows a stream processing system according to the invention.
Fig. 2 and 3 show a method for upgrading a stream processing system according to the invention.
Fig. 4 shows a computer software product according to the invention.
In the following the invention is described to be applied for a media gateway.

It is a perquisite to run a media gateway component that has to be upgraded in an 1+1 equipment protection mode, as e.g. described in the European Patent Application No. 06300844.5. A N+1 configuration must be reconfigured (temporary) to 1+1 configuration before this Software replacement procedure can be started.

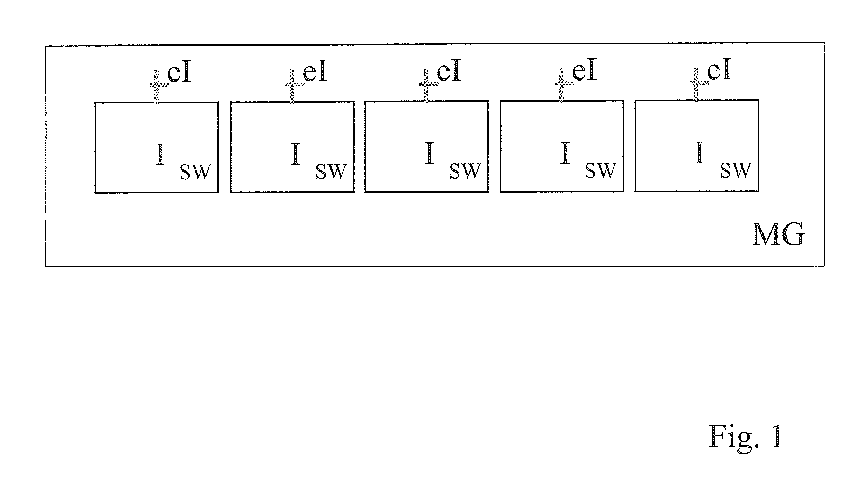

Such a configuration of a media gateway or in general a streamed processing system MG is shown in Fig. 1. The streamed processing system comprising sub-systems I each with an external interface for receiving and delivering streams. A sub-system needs running an operational software SW for being operable.

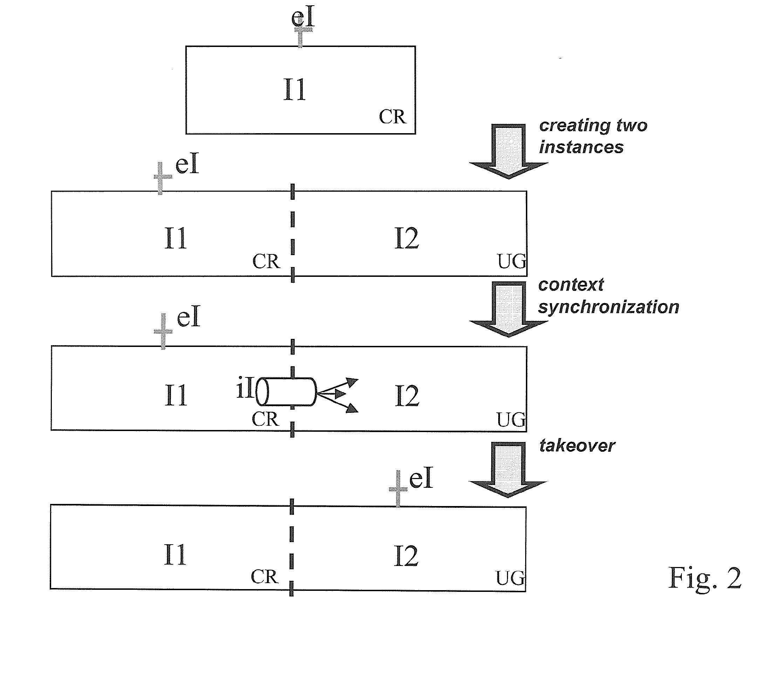

The software replacement procedure as shown in Fig. 2 can be subdivided into the following steps: First, creating two independent instances of the current software release CR one running on a first component I1 and one on a redundancy component 12. As a prerequisite for this step the system has to be running in a 1+1 equipment protection scheme. Preferably, any system redundancy scheme has to be designed with enough flexibility to switch online between N+1 and 1+1 schemes to upgrade components in an iterative scheme.

The two instances I1 and I2 run separate software versions, first running isolated from each other, shown by the dashed vertical lines. The instance I1, which is running the current release, keeps its (H.248) interface el active; the redundant instance is running the upgrade UG and awaits context information to synchronize.

Context data shall be synchronized between the instance I1 running the current release CR and the instance 12 running the upgrade UG via an internal interface il, to make sure that active bearer channels are maintained during the software replacement procedure.

As this is the only communication channel between the two instances I1 and I2, this interface has to be independently defined of normal operation, i.e. it has to be stable and therefore exclusively used for this application.

The instance 12 receiving the context data has to roll out streaming context, e.g. the bearer configuration in the case of a media gateway, towards its software modules (southbound). Context-Data synchronization and the Roll-out-mechanism cover stable bearers as well as bearers in setup/teardown phase.

After the two instances I1 and 12 are synchronized the instance 12 running already the upgrade UG is ready to takeover by preserving the stable bearers. As already said, contexts are synchronized; the bearers are completely setup within both instances I1 and 12. Thus the system takeover can be executed in a hitless manner.

Therefore system takeover procedure is limited to external interface reconfiguration. This could be a simple switch e.g. realized in hardware to minimize bearer interruption. At this point in time the instance 12 running the upgrade UG takes the external interface el, e.g. a H.248 interface.

The procedure is finalized by initializing the instance I1 still running the current release with the new release.

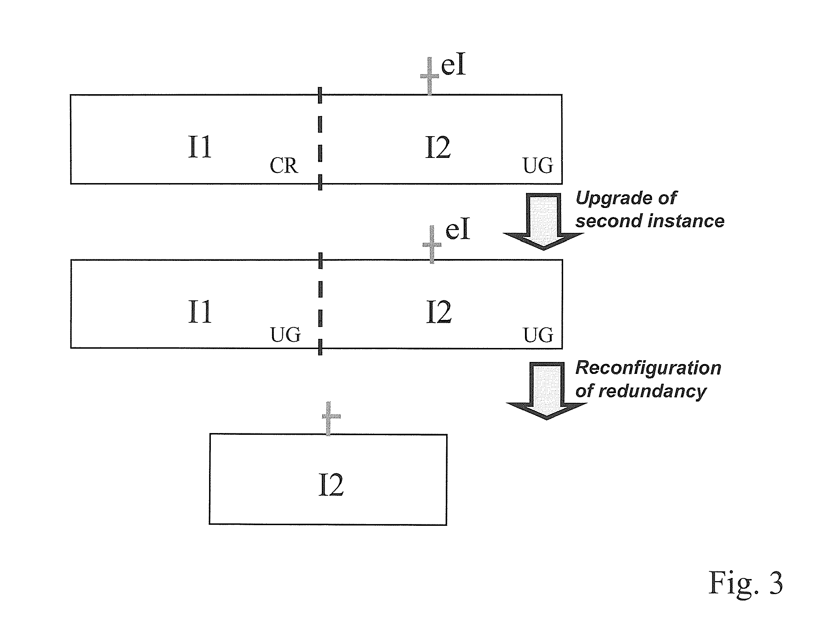

Then the instance I1 running the current release CR and the instance 12 running the upgrade UG could be merged in one fully redundant 1 +1 protected system, which is shown in Fig. 3.

The concerned boards will be loaded with the upgrade and the boards will be assigned to the "standby" state. Active/standby board synchronization follows the regular system principles of active/standby board synchronization. From this point in time the streamed processing system runs the upgrade and furthermore full system redundancy is restored.

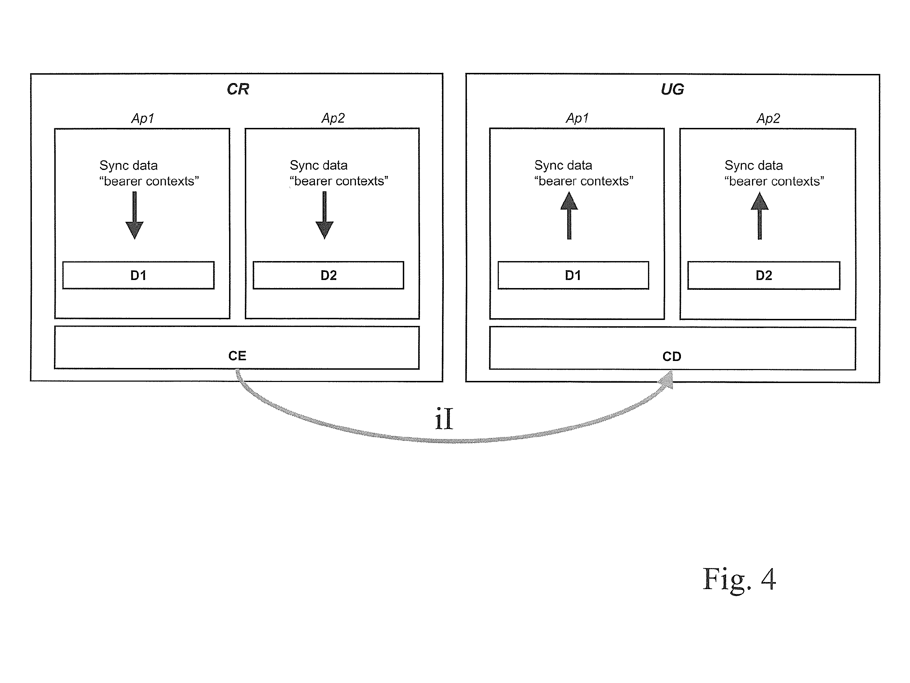

Fig. 4 shows a principle picture of the software architecture (in the phase of context data synchronization). A current release CR that has to be replaced by an upgrade UG, i.e. a new release is shown. Both CR and UG comprises parts, i.e. applications AP1, AP2, that - when executed - process streams. In the phase of an upgrade the timing of this stream processing must be denoted and communicates in order to synchronize both CR and UG. Therefore synchronization events are made explicit by an encoder/decoder D of a synchronization of events. Preferably such a denotation uses well-established formats like the ASN.1 Syntax or XML.

Such synchronization events might be the state of a process a dedicated variable, a value where preferably the type is used to match the occurrence of the synchronization events in both releases CR and UG.

Beside the transfer of the generated description stream via the internal interface il a transformation could happen eliminating for instance unnecessary synchronization information, e.g. a depreciated state variable. The transformation could also define default values for synchronization information that is not available.

This transformation in combination with the description denotation for events ensures a stable migration between multiple releases. Since the encoder/decoder D could normalize and provide the relevant and necessary event descriptions for synchronization. This enables for instance a change of the event structure and the reactivity of the software which is rather impossible when synchronizing e.g. on raw data, like internal protocol stack events.

The normalization could also avoid inconsistencies by not replicating or providing redundant event information.

The description stream is decoded at the upgrade UG for stipulating the running upgrade with the recorded events. When the upgrade and the current release are synchronous a handover can take happen without any interruption.

## Claims

1. A method for replacing software of a stream processing system like a media gateway (MG) with redundancy comprising the steps of
- loading an upgrade (UG) of the software, or a part of the software, while the current release (CR) is running and
- integrating and activating the upgrade, such that the running upgrade takes over the functionality, **characterized in that**
the stream processing system comprises a redundancy sub-system for an operational sub-system (I1), which should be upgraded,
- this redundancy sub-system is reconfigured to an independent sub-system (12) and the upgrade (UG) is loaded on the independent system, while the operational sub-system (I1) remains operable with the current release (CR),
- then operational context information is synchronized between the operable sub-system (I1) and the independent sub-system (12) in order to synchronize the two running sub-systems, and
- after the synchronization, the running independent system (12) takes over hitless the functionality of the operational sub-system and becomes an operational sub-system running the upgrade (UG),
- finally, the upgrade is loaded on the original operating sub-system (I1) that is reconfigured as a redundancy sub-system.

2. A stream processing system like a media gateway (MG) comprising an operational sub-system (I1) and a redundancy sub-system for the operational sub-system (I1), the stream processing system is adapted to perform an upgrade (UG) of a software running on the two sub-systems, **characterized in that** the stream media processing system comprising reconfiguration means for reconfiguring the redundancy sub-system into an independent sub-system (12) running the upgrade (UG), the stream processing system comprising intercommunication means between the sub-systems, where the intercommunication means (iI) are adapted to synchronize operational context information between the two sub-systems, and where the reconfiguration means are adapted to transfer the functionality from the operational sub-system to the independent sub-system making the independent sub-system operable, and where the stream processing system comprising upgrading means for upgrading the operational sub-system, and where the reconfiguration means are adapted to reconfigure the operational sub-system (I1) after upgrading as a redundancy sub-system.

3. A computer software product comprising a component (I1) for streaming processing and a redundancy component for the component (12), **characterized in that** the computer software product comprising programming means for reconfiguring the redundancy component as independent instance of the upgrade, the component and the independent instance comprising an interface (iI) for synchronizing operational context information, such that the independent instance can take over the functionality of the component and the component can be upgraded independently for becoming a redundancy component.
